(19) **Europäisches Patentamt / European Patent Office / Office européen des brevets**

(11) **EP 1 729 405 B1**

(12) **EUROPEAN PATENT SPECIFICATION**

(45) Date of publication and mention
of the grant of the patent:
**07.01.2009 Bulletin 2009/02**

(51) Int Cl.:
*H02P 6/06* (2006.01)     *H02P 6/08* (2006.01)
*H02P 6/10* (2006.01)

(21) Application number: **05023859.1**

(22) Date of filing: **02.11.2005**

(54) **Speed control apparatus of vector controlled alternating current motor**

Gerät zur Drehzahlregelung eines feldorientiert geregelten Wechselstrommotors

Dispositif de régulation de la vitesse d'un moteur à courant alternatif à régulation vectorielle

(84) Designated Contracting States:
**DE FR GB**

(30) Priority: **03.06.2005 KR 2005047701**

(43) Date of publication of application:
**06.12.2006 Bulletin 2006/49**

(73) Proprietor: **Samsung Electronics Co., Ltd.**
**Suwon-si, Gyeonggi-Do (KR)**

(72) Inventors:
• **Lee, Joon Hwan**
**210-1401, Indeokwon Daelim 2nd Apt**
**Gyeonggi-Do (KR)**
• **Lee, Kwang Woon**
**611-904, Geukdong Apartment**
**Gyeonggi-Do (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**US-B1- 6 259 226**

• **RAHMAN, M.F.; HAQUE, M.E.; ZHONG, L.; NAGRIAL, M.: "A sensorless speed estimator for the direct torque control of an interior permanent magnet synchronous motor drive" INTERNATIONAL CONFERENCE ON POWER ELECTRONICS, MACHINES AND DRIVES, 2002, pages 504-509, XP002356887**
• **HAQUE, M.E.; ZHONG, L.; RAHMAN, M.F.: "The effect of offset error and its compensation for a direct torque controlled interior permanent magnet synchronous motor drive" IEEE INTERNATIONAL ELECTRIC MACHINES AND DRIVES CONFERENCE, 2001, pages 814-819, XP002356888**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a speed control apparatus of a vector control alternating current motor, and more particularly, to a speed control apparatus of a vector control alternating current motor capable of compensating for errors in measured electric current.

2. Description of the Related Art

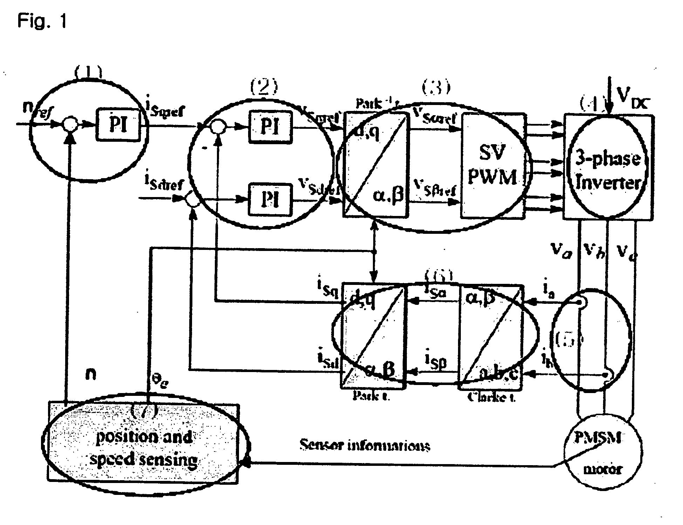

Vector control in high performance alternating current motor driving systems for driving a permanent magnet synchronous motor or an induction motor is widely used to precisely control speed of the motors. FIG. 1 is a block diagram illustrating control of a conventional vector control alternating current motor. The vector control algorithm is based on several assumptions, and one of them is the precise measurement of electric current.
Due to errors of the measured electric current, undesirable periodic torque ripple synchronized with the frequency of stator input current is generated, thereby causing speed ripple.
In order to restrain the speed ripple, the error of the measured current must be compensated for.
In the error of the measured current, there are an offset error and a scale error, in which the offset error generates a speed ripple corresponding to the frequency of the stator current and the scale error generates a speed ripple corresponding to twice the frequency of the stator current.
A conventional compensation method will now be described with reference to a cited document proposing a method for compensating for the offset error and the scale error.

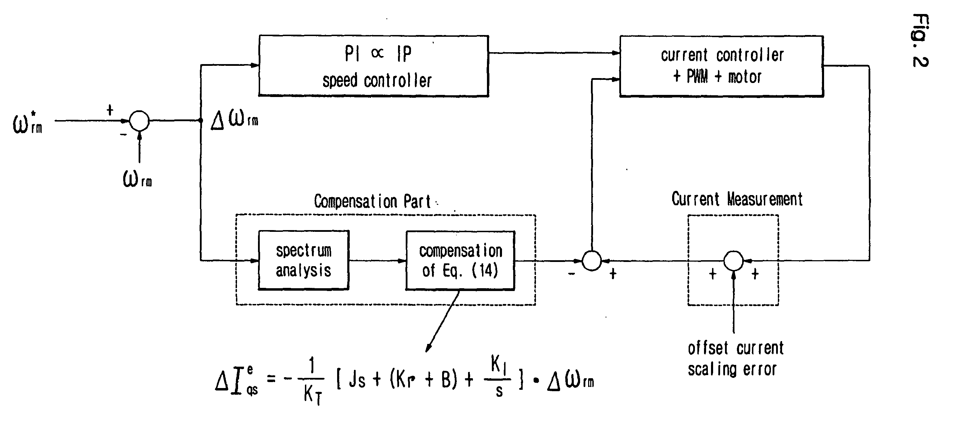

FIG. 2 is a block diagram illustrating a speed control method proposed in the cited document ("Analysis and Compensation of Current Measurement Error in Vector-Controlled AC Motor Drives", IEEE Transaction Industry Application, VOL. 34, NO. 2, PP.340-345, 1988.). According the speed control method, a compensation unit receives a speed error corresponding to a speed difference between speed command and detected speed, estimates components of the offset error and the scale error of a current controller through spectral analysis of the speed error and the current controller compensates for the measured result based on the estimation result so that the speed ripple due to the offset error and the scale error can be restrained.

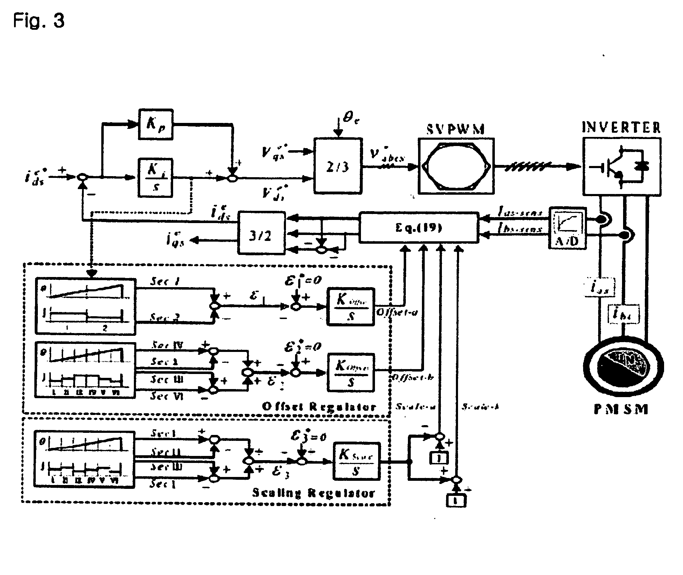

FIG. 3 is a block diagram illustrating a speed control method proposed in another cited document ("Diminution of Current Measurement Error in Vector Controlled AC Motor Drives", pp. 151-158, Journal of Power Electronics, Vol. 5, No. 2, April 2005.). According to the speed control method proposed in this cited document, the offset error and the scale error of the current controller are estimated by integrating and comparing integrated term outputs of a d-axis current controller in every region (every 60 electric angle) in accordance with the position of a rotor. Since, generally, d-axis current command has 0 (zero) or a predetermined value, only item corresponding to the offset error and the scale error can be extracted from the difference between the d-axis command and the detected d-axis current.
The offset regulator of FIG. 3 can eliminate components of the offset error by respectively setting values of e 1 and ε 2 to 0 (zero) using the following formulas (1), (2), and (3).

## Formula (1)

$$Ki \int_0^{} (i_{ds}^{e*} - i_{ds\_sens}^e) dt = -Ki \int_0^{} \Delta i_{ds}^e dt$$

$$\sec A = \int_0^{\pi} \int_0^{} -K_i \Delta I_{ds}^e dt d\theta_e = -2 \frac{K_j}{\omega_e} \Delta I_{ds}$$

$$\sec B = \int_{\pi}^{2\pi} \int_0^{} -K_j \Delta I_{ds}^e dt d\theta_e = -2 \frac{K_i}{\omega_e} \Delta I_{ds}$$

## Formula (2)

$$\varepsilon_1 = \sec 1 - \sec 2 = -4\frac{K_i}{\omega_e}\Delta I_{ds}$$

## Formula (3)

$$\sec I = \int_0^{\frac{\pi}{3}}\int_0^t -K_j\Delta_{ds}^e \, dt \, d\theta_e = \frac{K_i}{\omega_e}\Delta I_{ds}$$

$$\sec III = \int_{\frac{2\pi}{3}}^{\pi}\int_0^t -K_i\Delta I_{ds}^e \, dt \, d\theta_e = \frac{K_i}{\omega_e}(\Delta I_{ds} - \Delta I_{bs}) \qquad \varepsilon_a = \sec IV - \sec I,$$

$$\sec IV = \int_{\pi}^{\frac{4\pi}{3}}\int_0^t -K_i\Delta I_{ds}^e \, dt \, d\theta_e = -\frac{K_j}{\omega_e}\Delta I_{bs} \qquad \varepsilon_b = \sec III - \sec VI$$

$$\sec VI = \int_{\frac{5\pi}{3}}^{2\pi}\int_0^t -K_i\Delta I_{ds}^e \, dt \, d\theta_e = \frac{K_j}{\omega_e}(\Delta I_{ds} + \Delta I_{bs}) \qquad \varepsilon_2 = \varepsilon_a + \varepsilon_b = -4\frac{K_i}{\omega_e}\Delta I_{bs}$$

The offset regulator of FIG. 3 can eliminate the scale error by setting values of ε 3 to 0 (zero) using the following formula (4).

## Formula (4)

$$\sec I = \int_0^{\frac{\pi}{3}}\int_0^t -K_i\Delta_{ds-scale}^e \, dt \, d\theta_e = 0 \qquad \varepsilon_x = \sec I - \sec II,$$

$$\sec II = \int_{\frac{\pi}{3}}^{\frac{2\pi}{3}}\int_0^t -K_i\Delta I_{ds-scale}^e \, dt \, d\theta_e = -\frac{3K_i(K_b - K_a)I}{8\sqrt{3}\omega_e} \qquad \varepsilon_b = \sec III - \sec VI$$

$$\sec III = \int_{\frac{2\pi}{3}}^{\pi}\int_0^t -K_i\Delta I_{ds-scale}^e \, dt \, d\theta_e = \frac{3K_i(K_b - K_a)I}{8\sqrt{3}\omega_e} \qquad \varepsilon_3 = \varepsilon_x + \varepsilon_y = \frac{\sqrt{3}K_i(K_b - K_a)}{4\omega_e}$$

According to the conventional art proposed in FIG. 2, since the process of obtaining offset deviation and scale deviation through the spectral analysis requires a large number of calculations, an expensive high-speed microprocessor or a digital signal processor (DSP) must be used. On the other hand, when using a cheap fixed point type DSP, it is difficult to obtain the offset deviation and the scale deviation.

According to the conventional art proposed in FIG. 3, the process of comparing the integrated terms of the d-axis current controller is complicated, it is difficult to obtain precise value of the integrated terms in every region under the condition that rotational position information estimated as in the sensorless control method is not precise, and calculations are complex.

US 6 259 226 B1 describes a controlling device for an AC motor in which a current of a three phase brushless DC motor is detected and then converted to a rotor coordinate system, to separately control a torque split current and an exciting split current. A current detector detects currents flowing to the brushless DC motor by output voltages of the PWM inverter. A three phase/d-q coordinate converter inputs the currents detected by the current detector and converts the currents to an exciting split current and a torque split current of a rotor coordinate system by the output of the sine wave generator. In an eighth embodiment, a low-pass filter is described which removes the high-frequency ripple of the output of the gain circuit.

Rahman, M. F. et al.: "A sensorless speed estimator for the direct torque control of an interior permanent magnet synchronous motor drive", International Conference on Power Electronics, Machines and Drives, 2002, pp. 504-509, observes that there is a drift in stator flux locus due to the offset error in the flux linkage estimation. Therefore, the compensation for the offset error is necessary. A programmable, cascaded low pass filter can be used to compensate for the offset error.

Haque, M. E. et al.: "Effect of offset error and its compensation for a direct torque controlled interior permanent magnet synchronous motor drive", IEEE International Electric Machines and Drives Conference, 2001, pp. 814-819, investigates the problem caused by the DC offset in measurements to the estimation of stator flux linkage and torque in direct torque controlled interior permanent magnet synchronous motor drive. The output of a cascaded filter is bounded even when some DC offset is present in the input. The output of the filter matches the input without the DC offset.

The present invention has been made in view of the above-mentioned problems, and the object of the invention is to provide a speed control apparatus of a vector controlled alternating current motor capable of reducing noise and vibration of an alternating current motor by restraining and applying measured current error generated from a current sensor, peripheral circuits, and so on when detecting current of the alternating current motor.

This object is solved by the subject matter of the independent claim.

Preferred embodiments are defined in the dependent claims.

In accordance with one aspect, the present invention provides an apparatus for controlling speed of a vector controlled alternating current motor including a current measuring unit for measuring current of the alternating current motor, an error arithmetic unit for calculating error component of the current measured by the current measuring unit by eliminating an alternating current component contained in the measured current, and a compensation unit for compensating the current measured by the current measuring unit using the error component of the measured current calculated by the error arithmetic unit.

In accordance with another aspect, the present invention provides an apparatus for controlling speed of a vector controlled alternating current motor including a current measuring unit for measuring current of the alternating current motor, an error arithmetic unit for calculating error component of the current measured by the current measuring unit by eliminating a position functional component contained in the measured current, and a compensation unit for compensating the current measured by the current measuring unit using the error component of the measured current calculated by the error arithmetic unit.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the embodiments, taken in conjunction with the accompanying drawings in which:

FIG. 1 is a block diagram illustrating the control of a conventional vector controlled alternating current motor;
FIG. 2 is a block diagram illustrating a conventional speed control method proposed in the cited document;
FIG. 3 is a block diagram illustrating a conventional speed control method proposed in another cited document;
FIG. 4 is a block diagram illustrating a control apparatus of a vector controlled alternating current motor according to a preferred embodiment of the present invention;
FIG. 5 is a view illustrating an offset arithmetic unit according to a first preferred embodiment of the present invention;
FIG. 6 is a view illustrating an offset of an a-phase current compensated for by the offset arithmetic unit of FIG. 5;
FIG. 7 is a view illustrating an offset of a b-phase current compensated by the offset arithmetic unit of FIG. 5;
FIG. 8 is a view illustrating an offset arithmetic unit according to a second preferred embodiment of the present invention;
FIG. 9 is a view illustrating an offset of an a-phase current compensated for by the offset arithmetic unit of FIG. 8;
FIG. 10 is a view illustrating an offset of a b-phase current compensated for by the offset arithmetic unit of FIG. 8;
FIG. 11 is a view illustrating a scale arithmetic unit according to the first preferred embodiment of the present invention;
FIG. 12 is a view illustrating a scale arithmetic unit according to the second preferred embodiment of the present invention, wherein:

FIG. 12a is a view illustrating the compensation of a d-axis; and
FIG. 12b is a view illustrating the compensation of a q-axis; and

FIG. 13 shows graphs illustrating the offset error and the scale error before and after compensation according to the present invention.

## DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

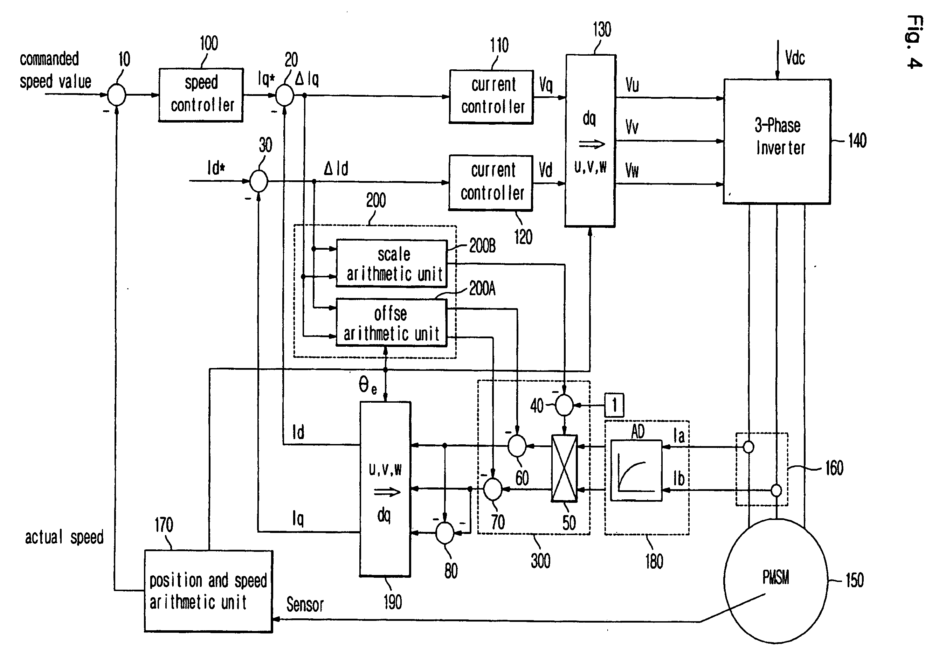

FIG. 4 is a block diagram illustrating a speed control apparatus of a vector controlled alternating current motor according to a preferred embodiment of the present invention. The speed control apparatus of a vector controlled alternating current motor includes subtractors 10, 20, and 30, a speed controller 100, current controllers 110 and 120, a voltage modulator 130, three-phase inverter 140, an alternating current motor 150, a position and speed arithmetic unit 170, and a coordinate converter 190, which are employed in the conventional vector control system.

Moreover, the speed control apparatus of a vector controlled alternating current motor according to the preferred embodiment of the present invention further includes a current measuring unit 160 for measuring current passing through the alternating current motor 150, a converter 180 for digitizing the measured current, and particularly, an arithmetic unit 200 for calculating error of the measured current, and a compensation unit 300 for compensating the error of the measured current.

The arithmetic unit 200 includes an offset arithmetic unit 200A for calculating offset error of the measured current and a scale arithmetic unit 200B for calculating scale error of the measured current.

Although the present invention is described by an example of the speed control apparatus applied to a speed control apparatus using a sensor capable of calculating the position and speed of a motor according to the output of an encoder (a speed sensor) as shown in FIG. 4, the present invention can be applied to a sensorless speed control apparatus for estimating the position and speed of a motor without a speed sensor.

When an offset error is present in the current measured by the current measuring unit 160, the offset error can be expressed by the following formula (5). Here, $\Delta I_{as}$ is the offset error and a direct current component. Assuming that the a-phase current and the b-phase current are $I_{as\_AD}$ and $I_{bs\_AD}$ respectively, the c-phase current $I_{cs\_AD}$ is expressed by the following formula.

### Formula (5)

$$I_{as\_AD} = I_{as} + \Delta I_{as}$$
$$I_{bs\_AD} = I_{bs} + \Delta I_{bs}$$
$$I_{cs\_AD} = -(I_{as\_AD} + I_{bs\_AD})$$

Formula (5) is transformed into rotating coordinates for the vector control as shown in the following formula (6).

### Formula (6)

$$\Delta I^e_{ds\_AD} = I^e_{ds} + \Delta I^e_{ds} \,, \quad \Delta I^e_{qs\_AD} = I^e_{qs} + \Delta I^e_{qs}$$
$$\Delta I^e_{ds} = \Delta I_{ds} \cos\theta_e + 1/\sqrt{3}\,(\Delta I_{as} + 2\Delta I_{bs})\sin\theta_e$$
$$\Delta I^e_{qs} = -\Delta I_{as} \sin\theta_e + 1/\sqrt{3}\,(\Delta I_{as} + 2\Delta I_{bs})\cos\theta_e$$

The present invention proposes two methods for compensating for the offset error using the formula (6).

[A first method for compensating the offset error]

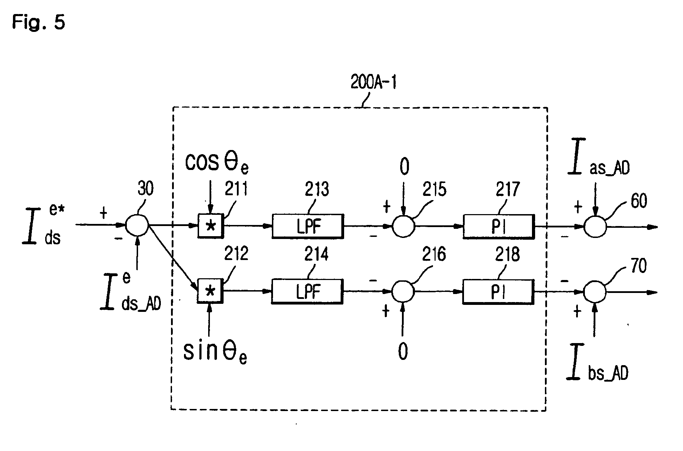

The first method uses the offset arithmetic unit 200A-1 as shown in FIG. 5.

The offset arithmetic unit 200A-1 recognizes the direct current error remaining in the error of the measured current after eliminating the alternating current error from the error of the measured current as the offset error. The difference between the command current and the measured current is multiplied by cosθ and sinθ using multipliers 211 and 212 and is arranged as shown in the following formulas (7) and (8).

## Formula (7)

$$\Delta I_{ds}^{e} \times \cos\theta_{e} = \frac{\Delta I_{as}}{2} + \frac{\Delta I_{as} \cdot \cos 2\theta_{e}}{2} + \frac{(\Delta I_{as} + 2\Delta I_{bs})\sin 2\theta_{e}}{2 \cdot \sqrt{3}}$$

## Formula (8)

$$\Delta I_{ds}^{e} \times \sin\theta_{e} = \frac{(\Delta I_{as} + 2\Delta I_{bs})}{2 \cdot \sqrt{3}} + \frac{\Delta I_{as} \cdot \sin 2\theta_{e}}{2} + \frac{(\Delta I_{as} + 2\Delta I_{bs})\cos 2\theta_{e}}{2 \cdot \sqrt{3}}$$

In formulas (7) and (8), cosθ and sinθ are alternating current components. The alternating current components are eliminated when passing through low pass filters (LPF) 213 and 214 having low cutoff frequency, and only the direct current component is retained. In other words, $\Delta I_{as}/2$ corresponds to the a-phase offset error obtained from formula (7),

and $(\Delta I_{as} + 2\Delta I_{bs})/\sqrt{3}$ corresponds to the b-phase offset error.

Subtractors 215 and 216 subtract the offset errors obtained from the above-formulas from a reference value 0 (zero), and output the subtracted offset errors to the compensation unit 300 via proportional integral (PI) controllers 217 and 218. Here, the PI controllers 217 and 218 can be replaced with integrators for performing integration alone.

The a-phase currents and b-phase currents outputted from the PI controllers are compensated by being subtracted from the a-phase measured current $I_{as\_AD}$ and the b-phase measured current $I_{bs\_AD}$ in subtractors 60 and 70 of the compensation unit 300, as will be described later.

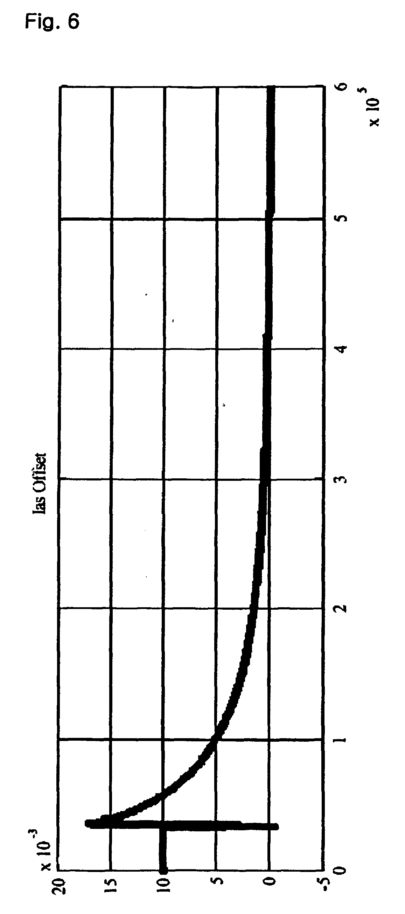

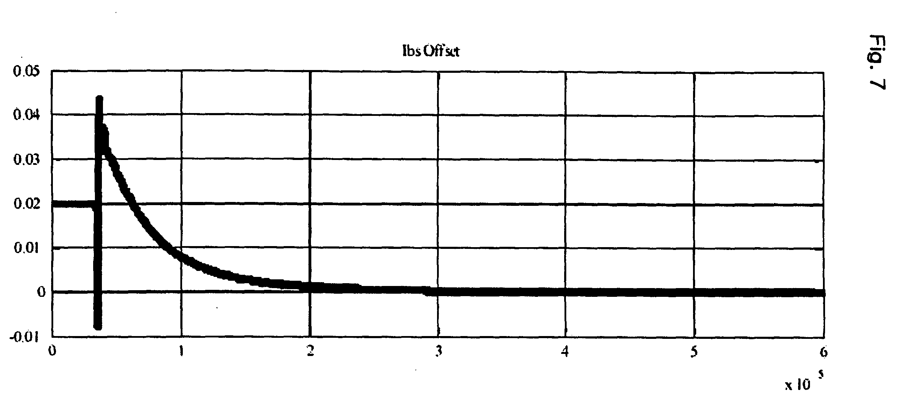

For example, when the $I_{as}$ offset error is 0.01, the $I_{as}$ offset error is compensated for as shown in FIG. 6, and when the $I_{bs}$ offset error is 0.02, the $I_{bs}$ offset error is compensated for as shown in FIG. 7.

[A second method for compensating for the offset error]

As can be seen from the above-mentioned formula (6), the offset error is a function of position. If the position function is eliminated, the offset error becomes a function of only scale and the offset components can be obtained from the function of scale. In order to eliminate the position function, rotating coordinates are transformed into non-rotating coordinates using the following formula (9).

## Formula (9)

$$\begin{bmatrix} \Delta I_{ds}^{s} \\ \Delta I_{dq}^{s} \end{bmatrix} = \begin{bmatrix} \cos\theta_{e} & -\sin\theta_{e} \\ \sin\theta_{e} & \cos\theta_{e} \end{bmatrix} \begin{bmatrix} \Delta I_{as}\cos\theta_{e} + 1/\sqrt{3}(\Delta I_{as} + 2\Delta I_{bs})\sin\theta_{e} \\ -\Delta I_{as}\sin\theta_{e} + 1/\sqrt{3}(\Delta I_{as} + 2\Delta I_{bs})\cos\theta_{e} \end{bmatrix}$$

The offset components are expressed as non-rotating coordinates through the formula (9) as following formula (10).

## Formula (10)

$$\Delta I_{ds}^s = \Delta I_{as}$$
$$\Delta I_{qs}^s = 1/\sqrt{3}(\Delta I_{as} + 2\Delta I_{bs})$$

From formula (10), the offset components of $I_{as}$ and $I_{bs}$ can be obtained.

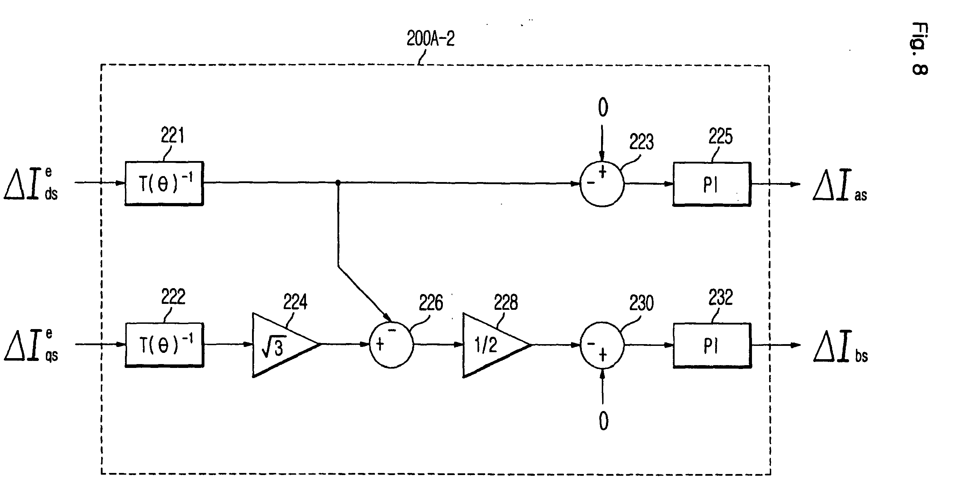

Considering the above-mentioned fact, the second method uses an offset arithmetic unit 200A-2 as shown in FIG. 8. The offset arithmetic unit 200A-2 includes a first offset transformer 221 for transforming a d-phase current from rotating coordinates to non-rotating coordinates, a subtractor 223 for subtracting 0 (zero) from the value transformed into non-rotating coordinates, and a proportion integral controller 225 for integrating the output of the subtractor 223. The offset arithmetic unit 200A-2 further includes a second offset transformer 222 for transforming a q-phase current of the rotating coordinates into the non-rotating system, an arithmetic unit 224 for multiplying the value transformed into non-rotating coordinates by $1/\sqrt{3}$, a subtractor 226 for subtracting the output of the first offset transformer 221 from the output of the arithmetic unit 224, an arithmetic unit 228 for multiplying the output of the subtractor 226 by 1/2, a subtractor 230 for subtracting 0 (zero) from the output of the arithmetic unit 228, and a proportional integral (PI) controller 232 for integrating the output of the subtractor 230. Here, the PI controllers 225 and 232 can be replaced with integrators for performing integration alone.

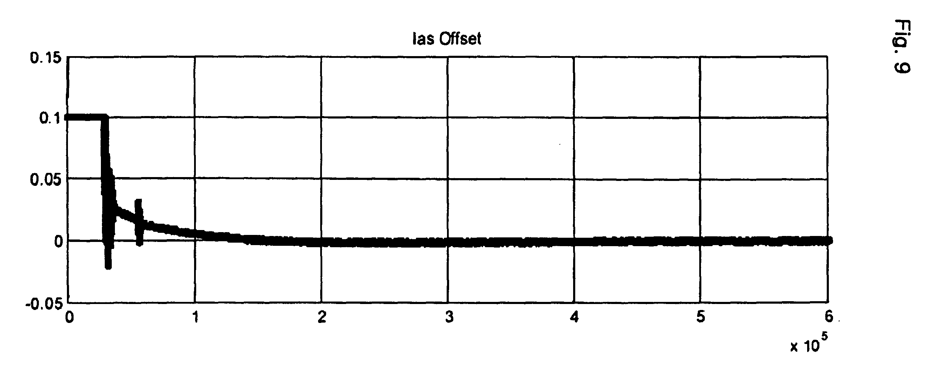

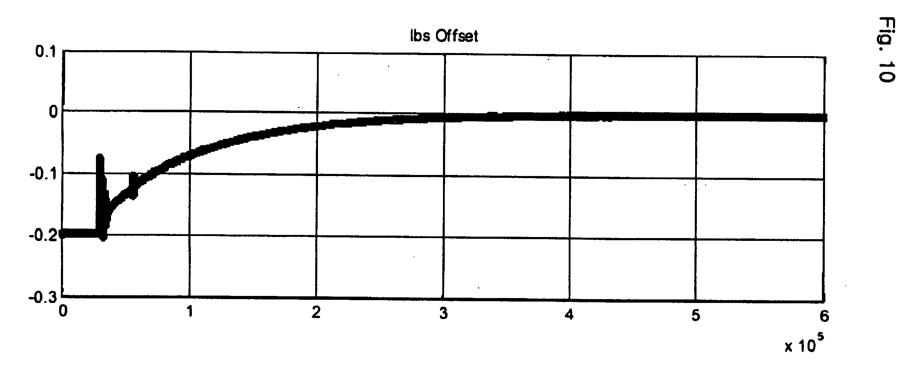

The a-phase offset component $\Delta I_{as}$ outputted from the PI controller 225 and the b-phase offset component $\Delta I_{bs}$ outputted from the PI controller 232 are respectively subtracted from the a-phase measured current $I_{as\_AD}$ and from the b-phase measured current $I_{bs\_AD}$ in a subtractor 60 and a subtractor 70 of the compensation unit 300 so that offset compensation is performed. For example, when the $I_{as}$ offset error is 0.1, the $I_{as}$ offset error is compensated for as shown in FIG. 9, and when the $I_{bs}$ offset error is -0.2, the $I_{bs}$ offset error is compensated for as shown in FIG. 10.

The present invention proposes two methods for compensating for the scale error.

[First method for compensating for scale error]

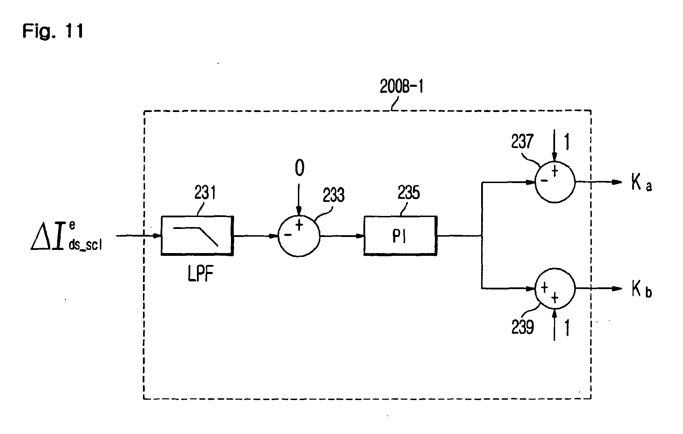

The first method uses a scale arithmetic unit 200B-1 as shown in FIG. 11.

Firstly, when the scale error is present in the measured current by the current measuring unit 160, the scale error can be expressed by the following formula (11).

## Formula (11)

$$I_{as\_sclAD} = -K_a I \sin\theta$$
$$I_{bs\_sclAD} = -K_b I \sin(\theta - \frac{2\pi}{3})$$
$$I_{cs\_sclAD} = (I_{as\_AD} + I_{bs\_AD})$$

The scale error is expressed in rotation coordinates via the following formula (12).

## Formula (12)

$$\Delta I^e_{ds\_scl} = \frac{(K_b - K_a)I}{2\sqrt{3}} + \frac{(K_a - K_b)I}{\sqrt{3}}\sin(2\theta - \frac{\pi}{6})$$

$$\Delta I^e_{qs\_scl} = -\frac{(K_a - K_b)I}{2} + \frac{(K_b - K_a)I}{\sqrt{3}}\sin(2\theta + \frac{\pi}{3})$$

As expressed in formula (12), the scale error component is a function of the direct current component and twice the fundamental frequency. In order to make the magnitude of the scale error 0 (zero), $K_a$ is equal to $K_b$. The value for d-axis component of formula (12) passes through a low pass filter (LPF) 231 so that the alternating current component is eliminated, and a subtractor 233 subtracts the output from the LPF 231 from 0 (zero). After that, a proportional integral (PI) controller 235 integrates the output of the subtractor 233. The integrated value is subtracted by a subtractor 237 and added by an adder 239. The value $K_a$ subtracted by the subtractor 237 is multiplied by the a-phase current inputted from a multiplier 50 via the subtractor 40 of the compensation unit 300 for the purpose of compensating for the scale error, and is inputted to the subtractor 60. The value Kb added by the adder 239 is multiplied by the b-phase current inputted from the multiplier 50 via the subtractor 40 of the compensation unit 300 for the purpose of compensating for the scale error, and is inputted to the subtractor 70. As such, the output of the scale arithmetic unit is compensated so that the scale error can be eliminated. Here, the PI controller 235 can be replaced with an integrator for performing integration alone.

[Second method for compensating for scale error]

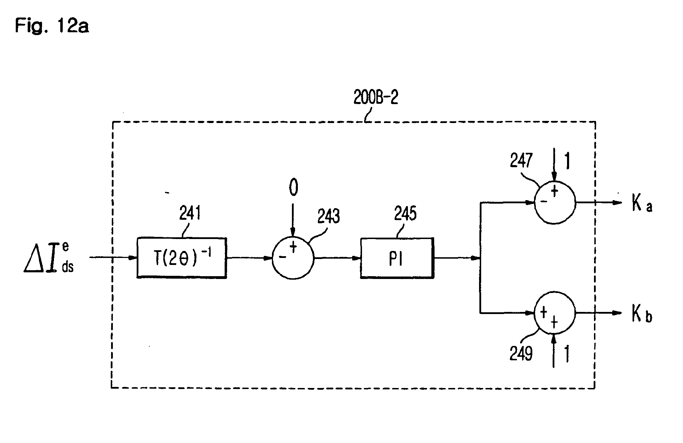

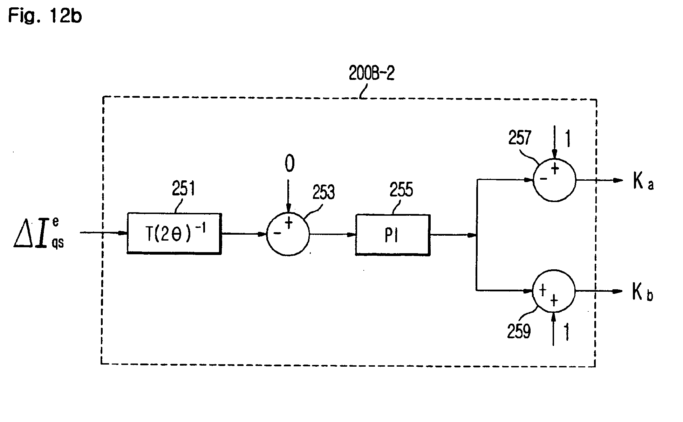

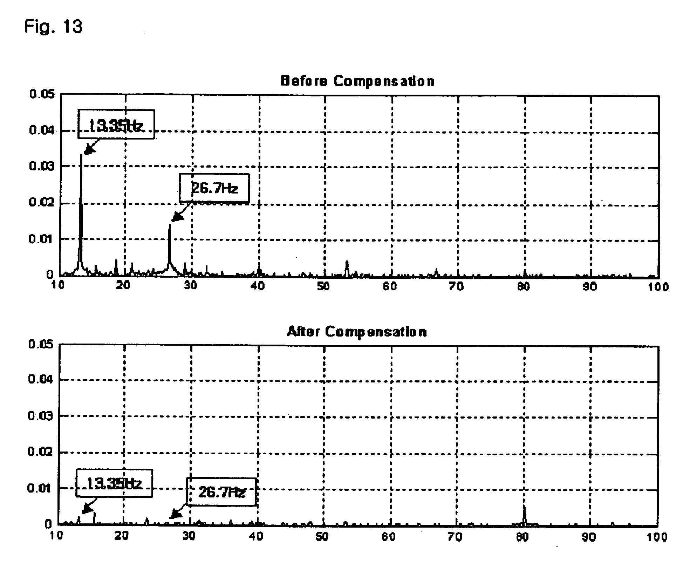

The second method for compensating for the scale error, as in formula (12), makes use of the fact that the d-axis component and the q-axis component are sine function and the phase difference therebetween is 90 degrees. Only direct current components can be obtained using the coordinate transformation. In other words, when the rotation coordinates are transformed into non-rotation coordinates by twice position angle 2θ the direct current corresponding to the magnitude of the scale error is extracted. Moreover, since the scale error component becomes 0 (zero) when $K_a$ is equal to $K_b$, the scale error can be compensated for by using only one of the d-axis component and the q-axis component. In other words, as shown in FIG. 12A, the scale error is compensated for with respect to the d-axis or the q-axis.
In other words, as shown in FIG. 12A, the current of the d-axis is transformed into non-rotating coordinate using a first scale transformer 241, a subtractor 243 subtracts the value transformed into non-rotating coordinates from 0 (zero), and a proportion integral (PI) controller 245 integrates the subtracted value. The integrated value is subtracted by a subtractor 247 and is added by an adder 249. The value $K_a$ subtracted by the subtractor 247 and the value $K_b$ added by the adder 249 are multiplied by the a-phase current and the b-phase current inputted from the multiplier 50 of the compensation unit 300 so that the scale error is compensated for and inputted into the subtractors 60 and 70. Here, the PI controller 245 can be replaced with an integrator for performing integration alone.
Moreover, as shown in FIG. 12B, the current of the q-axis is transformed into non-rotating coordinates using a second scale transformer 251, a subtractor 253 subtracts the value transformed into non-rotating coordinates from 0 (zero), and a proportion integral (PI) controller 255 integrates the subtracted value. The integrated value is subtracted by a subtractor 257 and is added by an adder 259. The outputs $K_a$ and $K_b$ of the subtractor 257 and the adder 259 are inputted into the multiplier 50 of the compensation unit 300 and are multiplied by the a-phase current and the b-phase current so that the scale error is compensated for and is inputted to the subtractors 60 and 70. Here, the PI controller 255 can be replaced with an integrator for performing integration alone.
The upper view of FIG. 13 is a graph illustrating the spectral analysis of the offset error and the scale error using automatic test equipment before compensation, and the lower view is a graph illustrating the spectral analysis of the offset error and the scale error using the automatic test equipment after the compensation. As shown in FIG. 13, it can be understood that the offset error and the scale error are eliminated.
As described above, according to the present invention, when performing vector control in an alternating current motor, since undesired speed ripple and noise are restrained by compensating for the error of the measure current generated when measuring current of the AC motor, the vector control can be efficiently performed. Particularly, since analysis of the spectrum like the conventional art is not necessary in the present invention, the speed control apparatus of a vector controlled AC motor can be implemented without an expensive processor and is economically advantageous.

**Claims**

1. An apparatus for controlling speed of a vector controlled alternating current motor comprising:

   a current measuring unit (160) for measuring a current of the alternating current motor;
   an error arithmetic unit (200) for calculating an error component of the current measured by the current measuring unit (160) by eliminating an alternating current component contained in the measured current, wherein the error arithmetic unit (200) comprises at least one of an offset arithmetic unit (200A) for calculating offset component of the measured current, and a scale arithmetic unit (200B) for calculating scale component of the measured current; and
   a compensation unit (300) for compensating the current measured by the current measuring unit (160) using the error component of the measured current calculated by the error arithmetic unit (200).

2. The apparatus for controlling speed of a vector controlled alternating current motor according to claim 1, wherein the error arithmetic unit (200) recognizes the direct current error, remaining in the error of the measured current after eliminating the alternating current error from the error of the measured current, as an offset error.

3. The apparatus for controlling speed of a vector controlled alternating current motor according to claim 2, wherein the error arithmetic unit (200) further comprises a plurality of multipliers (211, 212) for multiplying the difference between a command current and the measured current by a predetermined value.

4. The apparatus for controlling speed of a vector controlled alternating current motor according to claim 3, wherein the plural multipliers (211, 212) have $\cos\theta$ and $\sin\theta$ as the predetermined value.

5. The apparatus for controlling speed of a vector controlled alternating current motor according to claim 3, wherein the error arithmetic unit (200) further comprises a filter (213, 214) having cutoff frequency and eliminates the alternating current error using the filter.

6. The apparatus for controlling speed of a vector controlled alternating current motor according to claim 3, wherein the error arithmetic unit (200) further comprises a plurality of subtractors for subtracting the outputs of the plural multipliers from 0 (zero) respectively.

7. The apparatus for controlling speed of a vector controlled alternating current motor according to claim 6, wherein the error arithmetic unit further comprises a plurality of proportion integral controllers for integrating the outputs of the plural subtractors or integrators for integrating the outputs of the plural subtractors.

8. The apparatus for controlling speed of a vector controlled alternating current motor according to claim 7, wherein the compensation unit compensates the offset error using one of the outputs from one of the plural proportion integral controllers and one of measured phase currents, and compensates the offset error using one another of the outputs from one of the plural proportion integral controllers and one other measured phase current.

9. The apparatus for controlling speed of a vector controlled alternating current motor according to claim 1, wherein the scale arithmetic unit recognizes the direct current error remaining in the error of the measured current after eliminating the alternating current error from the error of the measured current as a scale error.

10. The apparatus for controlling speed of a vector controlled alternating current motor according to claim 9, wherein the scale arithmetic unit comprises a filter for eliminating an alternating current component of a d-axis current among the measured currents.

11. The apparatus for controlling speed of a vector controlled alternating current motor according to claim 10, wherein the scale arithmetic unit sets a value of a variable for defining the direct current component so as to make the direct current component 0 (zero).

12. The apparatus for controlling speed of a vector controlled alternating current motor according to claim 11, wherein the scale arithmetic unit further comprises a subtractor for subtracting the value from which the alternating current component has been eliminated from 0 (zero).

13. The apparatus for controlling speed of a vector controlled alternating current motor according to claim 12, wherein the scale arithmetic unit comprises a proportion integral controller for integrating the value subtracted by the subtractor or an integrator for integrating the value subtracted by the subtractor.

14. The apparatus for controlling speed of a vector controlled alternating current motor according to claim 1, wherein the error arithmetic unit (200) is further arranged for calculating an error component of the current measured by the current measuring unit (160) by eliminating a position functional component contained in the measured current.

15. The apparatus for controlling speed of a vector controlled alternating current motor according to claim 14, wherein the scale arithmetic unit comprises:

a transformer (241) for transforming rotating coordinates into non-rotating coordinates; and
at least one of an offset arithmetic unit (200A) for calculating an offset component from a function transformed into non-rotating coordinates and a scale arithmetic unit (200B) for calculating a scale component from the function transformed into non-rotating coordinates.

16. The apparatus for controlling speed of a vector controlled alternating current motor according to claim 15, wherein the offset arithmetic unit comprises a plurality of transformers for respectively transforming coordinates of a d-phase current and a q-phase current.

17. The apparatus for controlling speed of a vector controlled alternating current motor according to claim 16, wherein the error arithmetic unit comprises a subtractor for subtracting the d-phase current transformed into non-rotating coordinates from 0 (zero).

18. The apparatus for controlling speed of a vector controlled alternating current motor according to claim 16, wherein the offset arithmetic unit (200A) comprises:

a first arithmetic unit for multiplying the q-phase current transformed to non-rotating coordinates by a first variable;
a first subtractor (223) for subtracting the output of the first arithmetic unit from the d-phase current transformed into the non-rotating coordinate;
a second arithmetic unit for multiplying the output of the first subtractor by a second variable; and
a second subtractor (226) for subtracting the output of the second arithmetic unit from 0 (zero).

19. The apparatus for controlling speed of a vector controlled alternating current motor according to claim 15, wherein the scale arithmetic unit (200B) comprises at least one transformer for transforming the coordinates of at least one of the d-phase current and the q-phase current.

20. The apparatus for controlling speed of a vector controlled alternating current motor according to claim 15, wherein the scale arithmetic unit (200B) comprises a subtractor for subtracting the d-phase current or the q-phase current, which are transformed into the non-rotating coordinates, from 0 (zero).

21. The apparatus for controlling speed of a vector controlled alternating current motor according to claim 20, wherein the scale arithmetic unit (200B) further comprises a proportion integral controller for integrating the output of the subtractor or an integrator for integrating the output of the subtractor.

**Patentansprüche**

1. Vorrichtung zum Steuern von Geschwindigkeit eines vektorgesteuerten Wechselstrommotors, die umfasst:

eine Strommesseinheit (160) zum Messen eines Stroms des Wechselstrommotors;
eine Fehler-Recheneinheit (200) zum Berechnen einer Fehlerkomponente des durch die Strommesseinheit (160) gemessenen Stroms durch Eliminieren einer Wechselstromkomponente, die in dem gemessenen Strom enthalten ist, wobei die Fehler-Recheneinheit (200) wenigstens eine Offset-Recheneinheit (200A) zum Berechnen einer Offset-Komponente des gemessenen Stroms und eine Skalen-Recheneinheit (200B) zum Berechnen einer Skalenkomponente des gemessenen Stroms umfasst; und
eine Kompensationseinheit (300) zum Kompensieren des durch die Strommesseinheit (160) gemessenen Stroms unter Verwendung der durch die Fehler-Recheneinheit (200) berechneten Fehlerkomponente des gemessenen Stroms.

**2.** Vorrichtung zum Steuern von Geschwindigkeit eines vektorgesteuerten Wechselstrommotors nach Anspruch 1, wobei die Fehler-Recheneinheit (200) den Gleichstromfehler, der in dem Fehler des gemessenen Stroms nach Eliminieren des Wechselstromfehlers aus dem Fehler des gemessenen Stroms verbleibt, als einen Offset-Fehler erkennt.

**3.** Vorrichtung zum Steuern von Geschwindigkeit eines vektorgesteuerten Wechselstrommotors nach Anspruch 2, wobei die Fehler-Recheneinheit (200) des Weiteren eine Vielzahl von Multipliziereinrichtungen (211, 212) zum Multiplizieren der Differenz zwischen einem Befehlsstrom und dem gemessenen Strom mit einem vorgegebenen Wert umfasst.

**4.** Vorrichtung zum Steuern von Geschwindigkeit eines vektorgesteuerten Wechselstrommotors nach Anspruch 3, wobei die mehreren Multipliziereinrichtungen (211, 212) cosθ und sinθ als den vorgegebenen Wert aufweisen.

**5.** Vorrichtung zum Steuern von Geschwindigkeit eines vektorgesteuerten Wechselstrommotors nach Anspruch 3, wobei die Fehler-Recheneinheit (200) des Weiteren ein Filter (213, 214) mit einer Grenzfrequenz umfasst und den Wechselstromfehler unter Verwendung des Filters eliminiert.

**6.** Vorrichtung zum Steuern von Geschwindigkeit eines vektorgesteuerten Wechselstrommotors nach Anspruch 3, wobei die Fehler-Recheneinheit (200) des Weiteren eine Vielzahl von Subtrahiereinrichtungen zum jeweiligen Subtrahieren der Ausgänge der mehreren Multipliziereinrichtungen von 0 umfasst.

**7.** Vorrichtung zum Steuern von Geschwindigkeit eines vektorgesteuerten Wechselstrommotors nach Anspruch 6, wobei die Fehler-Recheneinheit des Weiteren eine Vielzahl von Proportional-Integral-Reglern zum Integrieren der Ausgänge der mehreren Subtrahiereinrichtungen oder Integriereinrichtungen zum Integrieren der Ausgänge der mehreren Subtrahiereinrichtungen umfasst.

**8.** Vorrichtung zum Steuern von Geschwindigkeit eines vektorgesteuerten Wechselstrommotors nach Anspruch 7, wobei die Kompensationseinheit den Offset-Fehler unter Verwendung eines der Ausgänge von einem der mehreren Proportional-Integral-Regler und eines von gemessenen Phasenströmen kompensiert und den Offset-Fehler unter Verwendung eines anderen der Ausgänge von einem der mehreren Proportional-Integral-Regler und eines anderen gemessenen Phasenstroms kompensiert.

**9.** Vorrichtung zum Steuern von Geschwindigkeit eines vektorgesteuerten Wechselstrommotors nach Anspruch 1, wobei die Skalen-Recheneinheit den Gleichstromfehler, der in dem Fehler des gemessenen Stroms nach Eliminieren des Wechselstromfehlers aus dem Fehler des gemessenen Stroms verbleibt, als einen Skalenfehler erkennt.

**10.** Vorrichtung zum Steuern von Geschwindigkeit eines vektorgesteuerten Wechselstrommotors nach Anspruch 9, wobei die Skalen-Recheneinheit ein Filter zum Eliminieren einer Wechselstromkomponente eines d-Achsen-Stroms von den gemessenen Strömen umfasst.

**11.** Vorrichtung zum Steuern von Geschwindigkeit eines vektorgesteuerten Wechselstrommotors nach Anspruch 10, wobei die Skalen-Recheneinheit einen Wert einer Variablen zum Definieren der Gleichstromkomponente so festlegt, dass die Gleichstromkomponente 0 wird.

**12.** Vorrichtung zum Steuern von Geschwindigkeit eines vektorgesteuerten Wechselstrommotors nach Anspruch 11, wobei die Skalen-Recheneinheit des Weiteren eine Subtrahiereinrichtung zum Subtrahieren des Wertes, aus dem die Wechselstromkomponente eliminiert worden ist, von 0 umfasst.

**13.** Vorrichtung zum Steuern von Geschwindigkeit eines vektorgesteuerten Wechselstrommotors nach Anspruch 12, wobei die Skalen-Recheneinheit einen Proportional-Integral-Regler zum Integrieren des durch die Subtrahiereinrichtung subtrahierten Wertes oder einen Integrator zum Integrieren des durch die Subtrahiereinrichtung subtrahierten Wertes umfasst.

**14.** Vorrichtung zum Steuern von Geschwindigkeit eines vektorgesteuerten Wechselstrommotors nach Anspruch 1, wobei die Fehler-Recheneinheit (200) des Weiteren so eingerichtet ist, dass sie eine Fehlerkomponente des durch die Strommesseinheit (160) gemessenen Stroms durch Eliminieren einer Positionsfunktionskomponente berechnet, die in dem gemessenen Strom enthalten ist.

**15.** Vorrichtung zum Steuern von Geschwindigkeit eines vektorgesteuerten Wechselstrommotors nach Anspruch 14, wobei die Skalen-Recheneinheit umfasst:

eine Transformiereinrichtung (241) zum Transformieren drehender Koordinaten in nicht drehende Koordinaten; und

wenigstens eine Offset-Recheneinheit (200A) zum Berechnen einer Offset-Komponente anhand einer in nicht drehende Koordinaten transformierten Funktion, und eine Skalen-Recheneinheit (200B) zum Berechnen einer Skalen-Komponente anhand der in nicht drehende Koordinaten transformierten Funktion.

**16.** Vorrichtung zum Steuern von Geschwindigkeit eines vektorgesteuerten Wechselstrommotors nach Anspruch 15, wobei die Offset-Recheneinheit eine Vielzahl von Transformiereinrichtungen umfasst, die jeweils Koordinaten eines d-Phasen-Stroms und eines q-Phasen-Stroms transformieren.

**17.** Vorrichtung zum Steuern von Geschwindigkeit eines vektorgesteuerten Wechselstrommotors nach Anspruch 16, wobei die Fehler-Recheneinheit eine Subtrahiereinrichtung zum Subtrahieren des in nicht drehende Koordinaten transformierten d-Phasen-Stroms von 0 umfasst.

**18.** Vorrichtung zum Steuern von Geschwindigkeit eines vektorgesteuerten Wechselstrommotors nach Anspruch 16, wobei die Offset-Recheneinheit (200A) umfasst:

eine erste Recheneinheit zum Multiplizieren des in nicht drehende Koordinaten transformierten q-Phasen-Stroms mit einer ersten Variable;
eine erste Subtrahiereinrichtung (223) zum Subtrahieren des Ausgangs der ersten Recheneinheit von dem in die nicht drehende Koordinate transformierten d-Phasen-Strom;
eine zweite Recheneinheit zum Multiplizieren des Ausgangs der ersten Subtrahiereinrichtung mit einer zweiten Variable; und
eine zweite Subtrahiereinrichtung (226) zum Subtrahieren des Ausgangs der zweiten Recheneinheit von 0.

**19.** Vorrichtung zum Steuern von Geschwindigkeit eines vektorgesteuerten Wechselstrommotors nach Anspruch 15, wobei die Skalen-Recheneinheit (200B) wenigstens eine Transformiereinrichtung zum Transformieren der Koordinaten wenigstens des d-Phasen-Stroms oder des q-Phasen-Stroms umfasst.

**20.** Vorrichtung zum Steuern von Geschwindigkeit eines vektorgesteuerten Wechselstrommotors nach Anspruch 15, wobei die Skalen-Recheneinheit (200B) eine Subtrahiereinrichtung zum Subtrahieren des d-Phasen-Stroms oder des q-Phasen-Stroms, die in die nicht drehenden Koordinaten transformiert sind, von 0 umfasst.

**21.** Vorrichtung zum Steuern von Geschwindigkeit eines vektorgesteuerten Wechselstrommotors nach Anspruch 20, wobei die Skalen-Recheneinheit (200B) des Weiteren einen Proportional-Integral-Regler zum Integrieren des Ausgangs der Subtrahiereinrichtung oder eine Integriereinrichtung zum Integrieren des Ausgangs der Subtrahiereinrichtung umfasst.

**Revendications**

**1.** Dispositif pour commander la vitesse d'un moteur à courant alternatif à commande vectorielle comportant :

une unité de mesure de courant (160) pour mesurer un courant du moteur à courant alternatif,
une unité arithmétique d'erreur (200) pour calculer une composante d'erreur du courant mesuré par l'unité de mesure de courant (160) en éliminant une composante de courant alternatif contenue dans le courant mesuré,
l'unité arithmétique d'erreur (200) comportant au moins une unité parmi une unité arithmétique de décalage (200A) pour calculer une composante de décalage du courant mesuré, et une unité arithmétique d'échelle (200B) pour calculer une composante d'échelle du courant mesuré, et
une unité de compensation (300) pour compenser le courant mesuré par l'unité de mesure de courant (160) en utilisant la composante d'erreur du courant mesuré calculée par l'unité arithmétique d'erreur (200).

**2.** Dispositif pour commander la vitesse d'un moteur à courant alternatif à commande vectorielle selon la revendication 1, dans lequel l'unité arithmétique d'erreur (200) reconnaît l'erreur due au courant continu subsistant dans l'erreur du courant mesuré après avoir éliminé l'erreur due au courant alternatif de l'erreur du courant mesuré, comme une erreur due au décalage.

3. Dispositif pour commander la vitesse d'un moteur à courant alternatif à commande vectorielle selon la revendication 2, dans lequel l'unité arithmétique d'erreur (200) comporte en outre une pluralité de multiplicateurs (211, 212) pour multiplier la différence entre un courant de commande et le courant mesuré, par une valeur prédéterminée.

4. Dispositif pour commander la vitesse d'un moteur à courant alternatif à commande vectorielle selon la revendication 3, dans lequel la pluralité de multiplicateurs (211, 212) a cosθ et sin θ comme valeur prédéterminée.

5. Dispositif pour commander la vitesse d'un moteur à courant alternatif à commande vectorielle selon la revendication 3, dans lequel l'unité arithmétique d'erreur (200) comporte en outre un filtre (213, 214) ayant une fréquence de coupure et élimine l'erreur due au courant alternatif en utilisant le filtre.

6. Dispositif pour commander la vitesse d'un moteur à courant alternatif à commande vectorielle selon la revendication 3, dans lequel l'unité arithmétique d'erreur (200) comporte également une pluralité de soustracteurs pour soustraire les sorties de la pluralité de multiplicateurs de 0 (zéro) respectivement.

7. Dispositif pour commander la vitesse d'un moteur à courant alternatif à commande vectorielle selon la revendication 6, dans lequel l'unité arithmétique d'erreur comporte de plus une pluralité de commandes proportionnelles-intégrales pour intégrer les sorties de la pluralité de soustracteurs ou des intégrateurs pour intégrer les sorties de la pluralité de soustracteurs.

8. Dispositif pour commander la vitesse d'un moteur à courant alternatif à commande vectorielle selon la revendication 7, dans lequel l'unité de compensation compense l'erreur due au décalage en utilisant l'une des sorties provenant d'une commande parmi la pluralité de commandes proportionnelles-intégrales et l'un des courants de phase mesurés, et compense l'erreur due au décalage en utilisant une autre des sorties provenant d'une commande parmi la pluralité de commandes proportionnelles-intégrales et un autre courant de phase mesuré.

9. Dispositif pour commander la vitesse d'un moteur à courant alternatif à commande vectorielle selon la revendication 1, dans lequel l'unité arithmétique d'échelle reconnaît l'erreur due au courant continu subsistant dans l'erreur du courant mesuré après avoir éliminé l'erreur due au courant alternatif de l'erreur du courant mesuré, comme une erreur d'échelle.

10. Dispositif pour commander la vitesse d'un moteur à courant alternatif à commande vectorielle selon la revendication 9, dans lequel l'unité arithmétique d'échelle comporte un filtre pour éliminer une composante de courant alternatif d'un courant d'axe d parmi les courants mesurés.

11. Dispositif pour commander la vitesse d'un moteur à courant alternatif à commande vectorielle selon la revendication 10, dans lequel l'unité arithmétique d'échelle fixe une valeur d'une variable pour définir la composante de courant continu de manière à rendre la composante de courant continu égale à 0 (zéro).

12. Dispositif pour commander la vitesse à moteur à courant alternatif à commande vectorielle selon la revendication 11, dans lequel l'unité arithmétique d'échelle comporte en outre un soustracteur pour soustraire la valeur à partir de laquelle la composante de courant alternatif a été éliminée, de 0 (zéro).

13. Dispositif pour commander la vitesse d'un moteur à courant alternatif à commande vectorielle selon la revendication 12, dans lequel l'unité arithmétique d'échelle comporte une commande proportionnelle-intégrale pour intégrer la valeur soustraite par le soustracteur ou un intégrateur pour intégrer la valeur soustraite par le soustracteur.

14. Dispositif pour commander la vitesse d'un moteur à courant alternatif à commande vectorielle selon la revendication 1, dans lequel l'unité arithmétique d'erreur (200) est également conçue pour calculer une composante d'erreur du courant mesuré par l'unité de mesure de courant (160) en éliminant une composante fonctionnelle de position contenue dans le courant mesuré.

15. Dispositif pour commander la vitesse d'un moteur à courant alternatif à commande vectorielle selon la revendication 14, dans lequel l'unité arithmétique d'échelle comporte :

un transformateur (241) pour transformer des coordonnées rotatives en coordonnées non rotatives, et

au moins une unité parmi une unité arithmétique de décalage (200A) pour calculer une composante de décalage à partir d'une fonction transformée en coordonnées non rotatives et une unité arithmétique d'échelle (200B) pour calculer une composante d'échelle à partir de la fonction transformée en coordonnées non rotatives.

16. Dispositif pour commander la vitesse d'un moteur à courant alternatif à commande vectorielle selon la revendication 15, dans lequel l'unité arithmétique de décalage comporte une pluralité de transformateurs pour transformer respectivement des coordonnées d'un courant de phase d et d'un courant de phase q.

17. Dispositif pour commander la vitesse d'un moteur à courant alternatif à commande vectorielle selon la revendication 16, dans lequel l'unité arithmétique d'erreur comporte un soustracteur pour soustraire le courant de phase d transformé en coordonnées non rotatives, de 0 (zéro).

18. Dispositif pour commander la vitesse d'un moteur à courant alternatif à commande vectorielle selon la revendication 16, dans lequel l'unité arithmétique de décalage (200A) comporte :

une première unité arithmétique pour multiplier le courant de phase q transformé en coordonnées non rotatives par une première variable,
un premier soustracteur (223) pour soustraire la sortie de la première unité arithmétique du courant de phase d transformé en coordonnées non rotatives,
une seconde unité arithmétique pour multiplier la sortie du premier soustracteur par une seconde variable, et
un second soustracteur (226) pour soustraire la sortie de la seconde unité arithmétique, de 0 (zéro).

19. Dispositif pour commander la vitesse d'un moteur à courant alternatif à commande vectorielle selon la revendication 15, dans lequel l'unité arithmétique d'échelle (200B) comporte au moins un transformateur pour transformer les coordonnées d'au moins un courant parmi le courant de phase d et le courant de phase q.

20. Dispositif pour commander la vitesse d'un moteur à courant alternatif à commande vectorielle selon la revendication 15, dans lequel l'unité arithmétique d'échelle (200B) comporte un soustracteur pour soustraire le courant de phase d ou le courant de phase q, qui sont transformés en coordonnées non rotatives, de 0 (zéro).

21. Dispositif pour commander la vitesse d'un moteur à courant alternatif à commande vectorielle selon la revendication 20, dans lequel l'unité arithmétique d'échelle (200B) comporte en outre une commande proportionnelle-intégrale pour intégrer la sortie du soustracteur ou un intégrateur pour intégrer la sortie du soustracteur.

Fig. 1

## Fig. 2

$$\Delta I_{qs}^{e} = -\frac{1}{K_{T}} [ Js + (K_{r} + B) + \frac{K_{l}}{s} ] \cdot \Delta \omega_{rm}$$

Fig. 3

Fig. 4

EP 1 729 405 B1

Fig. 5

Fig. 6

Fig. 7

Fig. 8

## Fig. 9

Fig. 10

Fig. 11

$\Delta I^e_{ds\_scl}$

231 LPF

0

233

235 PI

237 1

$K_a$

239 1

$K_b$

200B-1

## Fig. 12a

$$\Delta I^e_{ds} \quad \boxed{T(2\theta)^{-1}}_{241} \quad \underset{243}{\ominus} \quad \boxed{PI}_{245}$$

200B-2

0

247 1

$K_a$

249 1

$K_b$

Fig. 12b

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6259226 B1

### Non-patent literature cited in the description

- Analysis and Compensation of Current Measurement Error in Vector-Controlled AC Motor Drives. *IEEE Transaction Industry Application,* 1988, vol. 34 (2), 340-345
- Diminution of Current Measurement Error in Vector Controlled AC Motor Drives. *Journal of Power Electronics,* April 2005, vol. 5 (2), 151-158
- **RAHMAN, M. F. et al.** A sensorless speed estimator for the direct torque control of an interior permanent magnet synchronous motor drive. *International Conference on Power Electronics, Machines and Drives,* 2002, 504-509
- **HAQUE, M. E. et al.** Effect of offset error and its compensation for a direct torque controlled interior permanent magnet synchronous motor drive. *IEEE International Electric Machines and Drives Conference,* 2001, 814-819